# EUROPÄISCHE PATENTSCHRIFT

(11) **EP 1 262 290 B1**
(45) Veröffentlichungstag und Bekanntmachung des Hinweises auf die Patenterteilung: **31.05.2006**
(21) Anmeldenummer: 02004906.0
(22) Anmeldetag: 05.03.2002
(51) Int. Cl.: B27B 31/00, B27B 5/065, B23D 45/02, B23D 47/04, B65G 15/42

(54) **Sägeeinrichtung für Platten aus Holz, Kunststoff oder dergleichen**
Sawing device for panels made of wood, of plastic material, or similar
Dispositif de sciage pour panneaux en bois, en matière plastique, ou similaire

(30) Priorität: 08.03.2001 DE 10111326
(43) Veröffentlichungstag der Anmeldung: 04.12.2002
(73) Patentinhaber: GreCon Dimter Holzoptimierung Süd GmbH & Co. KG, 89257 Illertissen (DE)
(72) Erfinder: Jung, Erhard, 89281 Altenstadt (DE)
(74) Vertreter: Kohl, Karl-Heinz

(56) Entgegenhaltungen:
- DE-A- 1 781 187
- DE-A- 19 835 138
- DE-C- 539 365
- DE-U- 6 606 703
- FR-A- 1 415 123

## Beschreibung

Die Erfindung betrifft eine Sägeeinrichtung für Werkstücke aus Holz nach dem Oberbegriff des Anspruches 1 sowie ein Verfahren zum Sägen solcher Werkstücke nach dem Oberbegriff des Anspruches 12.

Eine soche Einrichtung und ein zugehöriges Verfahren sind aus DE 539 365 C bekannt.

Es ist bekannt, hinter Anlagen, in denen aus einzelnen lamellenförmigen Hölzern Platten hergestellt werden, eine Sägeeinrichtung aufzustellen, mit der die Platten im gewünschten Maß gesägt werden. Die in der Anlage hergestellten Platten werden nach einem Preßvorgang auf die Auflage geschoben, die aus mehreren, mit Abstand nebeneinander liegenden Ketten und schwenkbaren Auflagern besteht, auf denen die Platte zum Sägevorgang aufliegt. Eine solche Auflage ist teuer. Hinzu kommt, daß wegen der an den Ketten vorgesehenen schwenkbaren Auflager ihre Lage für jede Länge der Platten passend bestimmt werden muß. Daher sind oft viele Ketten nötig bzw. deren Lage bei jeder Anlage neu zu bestimmen.

Es ist eine Sägeeinrichtung bekannt (DE 539 365 C), bei der auf einer Transportkette mit Abstand hintereinander U-förmige Transportkästen befestigt sind. In die in Transportrichtung hintereinander liegenden Transportkästen werden Langhölzer gelegt, die mit einer Sägeeinheit zersägt werden. Das Sägeblatt der Sägeeinheit ist so angeordnet, daß die Sägeblätter zwischen benachbarten Transportkästen den Sägevorgang ausführen. Eine solche Sägeeinrichtung ist sehr aufwendig ausgebildet und lediglich für Langhölzer geeignet.

Es ist auch eine Sägeeinrichtung bekannt (DE 198 35 138 A), mit der aus Strangpressen ausgestoßene Werkstücke gesägt werden. Die aus Metall bestehenden Werkstücke liegen auf schwenkbaren Auflagern auf, die auf der Auflageseite mit Rollen versehen sind, über die die Werkstücke geschoben werden. Im Bereich der Sägeeinheit ist ein Sägetisch vorgesehen, der mit einem Sägespalt versehen ist, in den das Sägeblatt während des Sägevorganges eingreift.

Der Erfindung liegt die Aufgabe zugrunde, die gattungsgemäße Sägeeinrichtung und das gattungsgemäße Verfahren so auszubilden, daß die Werkstükke einfach und kostengünstig gesägt werden können.

Diese Aufgabe wird bei der gattungsgemäßen Sägeeinrichtung erfindungsgemäß mit den kennzeichnenden Merkmalen des Anspruches 1 und beim gattungsgemäßen Verfahren erfindungsgemäß mit den kennzeichnenden Merkmalen des Anspruches 12 gelöst.

Bei der erfindungsgemäßen Sägeeinrichtung hat die Auflage das Transportband, auf dem die in Transportrichtung sich erstreckenden Längsprofile quer zur Transportrichtung mit Abstand nebeneinander angeordnet sind: Das Transportband ist ein kostengünstiges Bauteil, was sich günstig auf die Kosten für die Sägeeinrichtung auswirkt. Da sich die Längsprofile in Längsrichtung des Transportbandes erstrecken, ist ihre Lage für jede Länge der zu sägenden Platten ideal angeordnet bzw. kann bei jeder neuen Anlage sehr einfach ohne konstruktiven Aufwand bestimmt werden. Beim Sägevorgang greift das Sägeblatt der Sägeeinheit in die Vertiefungen der Längsprofilteile ein, so daß die Längsprofilteile beim Sägen nicht beschädigt werden.

Beim erfindungsgemäßen Verfahren wird die Sägeeinheit beim Sägevorgang quer zur Transportrichtung der Werkstücke verfahren und so ausgerichtet, daß das Sägeblatt beim Sägen in die Vertiefungen der Längsprofilteile eingreift.

Weitere Merkmale der Erfindung ergeben sich aus den weiteren Ansprüchen 2 bis 11 und 13, der Beschreibung und den Zeichnungen.

Die Erfindung wird anhand eines in den Zeichnungen dargestellten Ausführungsbeispieles näher erläutert. Es zeigen
- Fig. 1: in Draufsicht eine erfindungsgemäße Sägeeinrichtung, die hinter einer Plattenverleimmaschine angeordnet ist,
- Fig. 2: eine Ansicht in Richtung des Pfeiles II in Fig. 1.

Die Sägeeinrichtung dient dazu, in einer Plattenverleimmaschine aus einzelnen Hölzern hergestellte Platten zu sägen.

Von einem Speicher oder Magazin 1 entnimmt eine Bedienungsperson lamellenförmige Hölzer 2 und legt sie einen Quertransporter 3, der die Hölzer 2 gegen einen Anschlag 4 quer zu ihrer Längsrichtung fördert. Hier werden die Hölzer von einer Transporteinrichtung übernommen, welche die Hölzer 2 nacheinander in ihrer Längsrichtung bis zu einem Anschlag 5 bzw. 6 transportiert. Bei diesem Transport werden die Hölzer an einer Längsseite mit einem Beleimgerät 7 mit Leim versehen. Sobald die Hölzer 2 an den jeweiligen Anschlag 5 oder 6 gelangen, wird das Holz mit einem Schieber quer zur ihrer Längsrichtung auf einen Querförderer 8 geschoben, auf dem die mit ihren Längsseiten aneinanderliegenden Hölzer zu einem Lamellenpaket in bekannter Weise zusammengestellt werden. Im dargestellten Ausführungsbeispiel können Lamellenpakete 9 und 9' mit unterschiedlicher Breite zusammengesetzt werden. Soll das Paket 9' mit den kurzen Hölzern hergestellt werden, wird der Anschlag 6 aus dem Transportweg der Hölzer 2 bewegt, so daß sie bis zum Anschlag 5 in ihrer Längsrichtung transportiert und durch den Querschieber auf den Querförderer 8 geschoben werden. Das jeweils nächste Holz 2 wird mit seiner beleimten Längsseite an das auf dem Querförderer 8 schon befindliche Paket 9' in bekannter Weise angedrückt.

Soll das breitere Paket 9 hergestellt werden, wird der Anschlag 6 in den Transportweg der Hölzer 2 gebracht, so daß sie bis zu diesem Anschlag 6 in ihrer Längsrichtung transportiert und mit dem Querschieber auf den Querförderer 8 geschoben werden.

Auf die beschriebene Weise werden auf dem Querförderer 8 die jeweiligen Pakete 9, 9' zusammengestellt. Beim Andrücken des jeweils nächsten Holzes 2 an das schon bestehende Paket 9, 9' wird in bekannter Weise ein Gegendruck erzeugt, so daß die einzelnen Hölzer des jeweiligen Paketes 9, 9' fest zusammengepreßt werden.

Sobald das Paket 9, 9' in der gewünschten Länge zusammengestellt ist, wird es in eine Presse 10, die nicht Gegenstand der Erfindung ist, geschoben, die mit einem Hydraulikaggregat 11 betätigt wird. Sobald das jeweilige Paket 9, 9' in die Presse 10 geschoben worden ist, wird mit dem Hydraulikaggregat 11 der entsprechende Pressenstempel nach unten bewegt und das in der Presse befindliche Paket gepreßt. Damit der Leim zwischen den Hölzern 2 rasch trocknet, wird bei diesem Preßvorgang auch Wärme eingesetzt.

In der Presse 10 können gleichzeitig die Pakete 9, 9' gepreßt werden. Sobald die Pakete 9, 9' ausreichend gepreßt sind, werden sie freigegeben und das während des Preßvorganges auf dem Querförderer 8 zusammengestellte neue Paket 9, 9' in die Presse 10 geschoben. Dabei wird das in der Presse 10 zuvor gepreßte und getrocknete Paket 9, 9' durch das nachfolgende, noch zu verpressende Paket in die Sägeeinrichtung 12 verschoben. Hier werden die Pakete 9, 9' quer zu ihrer Längsrichtung in einzelne Stücke gesägt. Die Sägeeinrichtung 12 hat eine Transporteinheit 13, auf die das Paket 9, 9' nach dem Preßvorgang geschoben wird. Mit der Transporteinheit 13 werden die zu zersägenden Pakete 9, 9' quer zur Längsrichtung der verleimten Hölzer 2 transportiert.

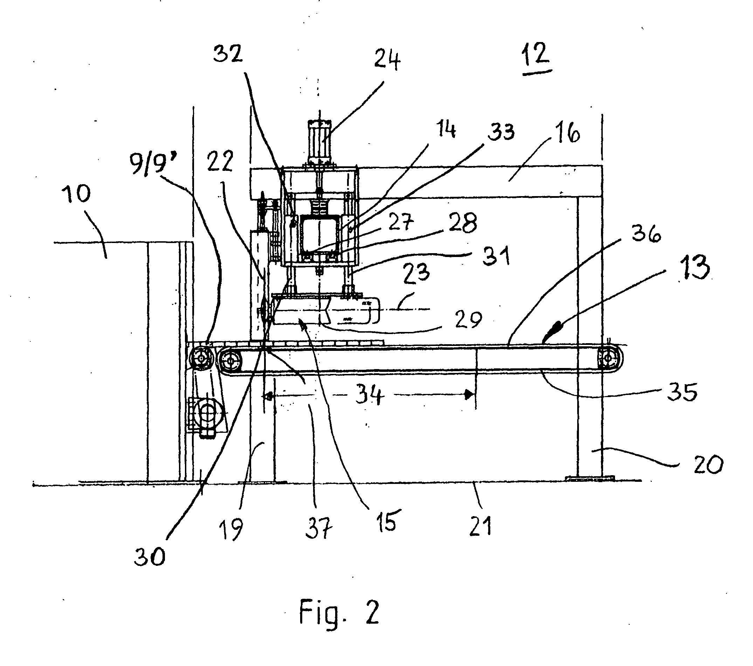

Die Sägeeinrichtung 12 hat einen Querträger 14, längs dem eine Sägeeinheit 15 verfahrbar ist. Der Querträger 14 ist an seinen beiden Enden jeweils auf einem Längsträger 16, 17 verfahrbar gelagert. Die Längsträger 16, 17 erstrecken sich in Transportrichtung 18 der Transporteinheit 13. Wie sich aus Fig. 2 ergibt, sind die Längsträger 16, 17 an ihren Enden auf Stützen 19, 20 aufgelagert, die auf dem Untergrund 21 stehen. Die Sägeeinheit 15 hat ein Kreissägeblatt 22, das um eine horizontale Achse 23 drehbar angetrieben ist.

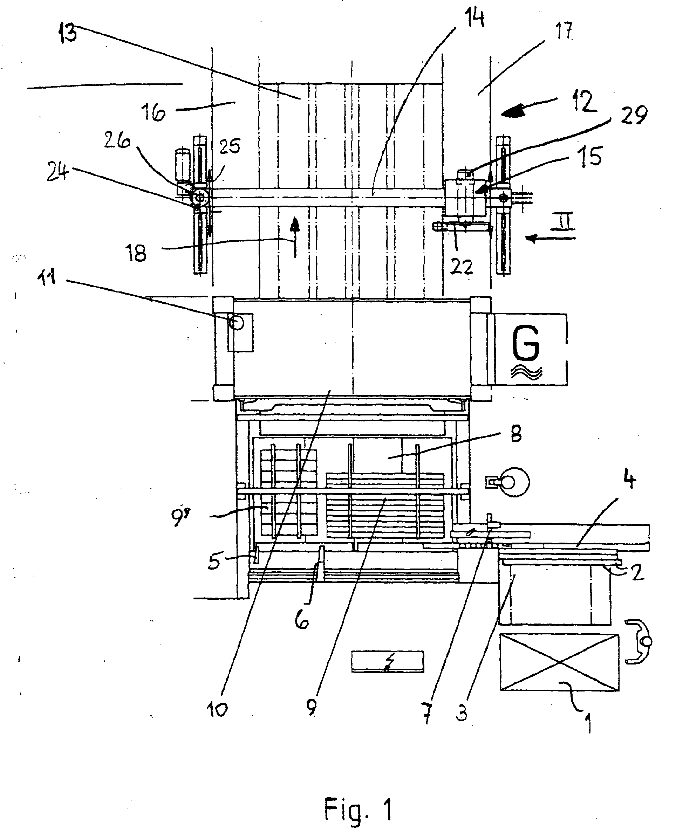

Zum Antrieb des Querträgers 14 längs der Längsträger 16, 17 dienen Antriebsmotoren 24, die in bekannter Weise den Querträger 14 mit der an ihm hängenden Sägeeinheit 15 parallel zur Transportrichtung 18 in Richtung der eingezeichneten Doppelpfeile 25 (Fig. 1) verfahren. Zum Verfahren der Sägeeinheit 15 senkrecht zur Verfahrrichtung 25 längs des Querträgers 14 ist ein stationärer Elektromotor 26 (Fig. 1) vorgesehen, mit dem die Sägeeinheit 15 im Ausführungsbeispiel über einen Kettentrieb verfahren wird. An der Unterseite des Querträgers 14 sind zwei nebeneinander liegende Linearführungen 27, 28 vorgesehen, die sich in Längsrichtung des Querträgers 14 erstrecken und an denen die Sägeeinheit 15 aufgehängt ist.

Die Sägeeinheit 15 hat einen horizontal liegenden Motor 29, mit dem das Sägeblatt 22 angetrieben wird. Der Sägemotor 29 hängt an parallel und mit Abstand zueinander liegenden Kolbenstangen 30, 31, die aus vertikalen Zylindergehäusen 32, 33 nach unten ragen. Sie sind im Bereich neben dem Querträger 14 in der Sägeeinheit 15 angeordnet. Über die Kolbenstangen 30, 31 wird der Sägemotor 29 pneumatisch in Schnittposition abgesenkt. Der maximale Verfahrweg der Sägeeinheit 15 längs der Längsträger 16, 17 ist in Fig. 2 mit 34 bezeichnet. Da der Sägemotor 29 in die jeweilige Schnittposition absenkbar ist, kann man auch bei mehrbahniger Arbeitsweise Platten 9, 9' unterschiedlicher Breite sägen.

Die Transporteinheit 13 im Anschluß an die Presse 10 ist auf die Länge und die Breite des aus der Presse ausgeschobenen plattenförmigen Paketes 9, 9' abgestimmt. Die Transporteinheit 13 hat ein Transportband 35, das im Ausführungsbeispiel eine Breite von 2500 mm und eine Länge zwischen etwa 2000 und 3000 mm hat. Selbstverständlich kann das Transportband 35 auch andere Abmessungen haben, je nach Abmessungen des zu sägenden Paketes 9, 9'. Es ist auch möglich, zwei oder mehr Transportbänder nebeneinander und/oder hintereinander vorzusehen. Das Transportband 35 ist geschlossen und weist auf seiner Oberseite über seine gesamte Länge sich erstreckende, leistenförmige Profilstücke 36 auf, die auf dem Transportband 35 aufgeschweißt oder aufgeklebt sind und vorzugsweise aus dem gleichen Material wie das Transportband 35 bestehen. Je nach Breite des Transportbandes 35 sind mehrere derartiger Längsprofile 36 vorgesehen. Im Ausführungsbeispiel sind die Längsprofile 36 in Abständen von etwa 100 bis 150 mm vorgesehen und haben beispielsweise eine Höhe von etwa 8 mm. Die Längsprofile 36 erstrecken sich über den gesamten Umfang des Transportbandes 35 und erstrecken sich in Transportrichtung 18. Auf diesen Längsprofilen liegt das Paket 9, 9' während des Sägevorganges auf.

Damit das Sägeblatt 22 die Längsprofile 36 beim Sägevorgang nicht zerstört, sind sie mit wenigstens einer Vertiefung 37 versehen, durch welche das Kreissägeblatt 22 während des Sägevorganges sich bewegt. Selbstverständlich liegen die Vertiefungen 37 der mit Abstand nebeneinander liegenden Längsprofile 36 auf gleicher Höhe. Die Breite der Vertiefungen 37 beträgt beispielsweise 50 mm, so daß ausreichend Spiel für das Kreissägeblatt 22 vorhanden ist.

Es ist möglich, daß die Längsprofile 36 mehrere mit Abstand hintereinander liegende Vertiefungen 37 aufweisen. Diese Vertiefungen 37 sind bei allen Ausführungsformen vorteilhaft so tief, daß sie bis zum Transportband 35 reichen.

Der Sägemotor 29 mit dem Kreissägeblatt 22 befindet sich beim Einschieben des Paketes 9, 9' in einer erhöhten Position, so daß das Paket 9, 9' zuverlässig auf die Längsprofile 36 des Transportbandes 35 geschoben werden kann. Das Paket 9, 9' wird durch das neu in die Presse 10 geschobene Paket auf das Transportband 35 geschoben. Das in die Presse 10 nachgeschobene, noch nicht verpreßte Paket 9, 9' richtet das ausgeschobene Paket auf dem Transportband 35 aus, so daß der anschließende Sägeschnitt problemlos durchgeführt werden kann.

Der Querträger 14 mit der Sägeeinheit 15 wird längs der Längsträger 16, 17 in die erforderliche Position gefahren. Vorteilhaft ist zum Antrieb des Querträgers 14 an dessen beiden Enden jeweils ein Motor 24 vorgesehen, so daß der Querträger 14 einwandfrei in Verfahrrichtung 25 verfahren werden kann. Der Querträger 14 wird in die zum Quersägen des Paketes 9, 9' vorgesehene Lage verfahren. Während dieses Verfahrens hat das Kreissägeblatt 22 Abstand vom Paket 9, 9'. Vorteilhaft befindet sich die Sägeeinheit 15 an einem Ende des Querträgers 14. Haben die senkrechten Stützen 19, 20 entsprechenden Abstand von den Längsrändern des Transportbandes 35, dann befindet sich in diesem Falle die Sägeeinheit 15 im wesentlichen im Bereich neben dem Paket 9, 9'.

Sobald das Kreissägeblatt 22 seine für den Sägeschnitt notwendige Lage erreicht hat, wird der Sägemotor 29 in die Schnittposition abgesenkt. Das Kreissägeblatt 22 befindet sich dann in Höhe der Vertiefungen 37 der Längsprofile 36 auf dem Transportband 35, das vor dem Einschieben des Pakets 9, 9' in die Sägeeinrichtung 12 so bewegt worden ist, daß die Vertiefungen 37 in Höhe des Kreissägeblattes 22 liegen. Sind die Längsprofile 36 nur mit einer Vertiefung 37 versehen, fährt das Transportband 35 einen Umlauf, bis die Vertiefungen 37 in der Schnittposition stehen. Nach dem Absenken des Sägemotors 29 in die Schnittposition wird die Sägeeinheit 15 längs des Querträgers 14 verfahren und dabei mit dem rotierenden Kreissägeblatt 22 das Paket 9, 9' im erforderlichen Maße gesägt.

Nach dem Sägevorgang wird das Transportband 35 so angetrieben, daß das abgesägte Plattenstück in Transportrichtung 18 wegtransportiert wird.

Sobald die Sägeeinheit 15 mit dem Querträger 14 in eine neue Schnittposition gefahren wird, fährt das Transportband 35 anschließend den restlichen Umlauf, bis die Vertiefungen 37 in neuer Schnittposition stehen.

Haben die Längsprofile 36 mehrere Vertiefungen, dann ist nicht ein gesamter Umlauf des Transportbandes 35 notwendig. Es muß dann nur so weit bewegt werden, bis eine der Vertiefungen 37 der Längsprofile 36 in Schnittposition liegt. Dann kann der nächste Sägevorgang durch Verfahren der Sägeeinheit 15 längs des Querträgers 14 vorgenommen werden.

Da sich die Vertiefungen 37 der Längsprofile 36 stets in der richtigen Lage während des Sägevorganges befinden, werden die Längsprofile durch das Kreissägeblatt 22 nicht beschädigt und müssen darum auch nicht ausgewechselt werden, die dies früher bei stationären Anlagen notwendig war.

Da das Transportband 35 eine geschlossene Auflage bildet, fallen keine Späne mehr nach unten, sondern können vom Transportband 35 optimal abgesaugt werden. Sollten dennoch Reststücke auf dem Transportband 35 verbleiben, werden sie an der Umlenkstelle des Transportbandes nach unten gefördert und können dort gesammelt werden.

Die Längsprofile 36 des Transportbandes 35 haben vorteilhaft geringen Abstand voneinander, so daß auch kurze bzw. schmale Pakete 9, 9' in jeder Position sicher aufliegen und zuverlässig transportiert werden.

Das Transportband 35 ist kostengünstig in der Anschaffung und gewährleistet für jede Paketlänge eine optimale Auflage. Der Querträger 14 wird vorteilhaft an beiden Enden über die Antriebe, die vorzugsweise Servoeinheiten sind, angetrieben. Die beiden Antriebe sind unabhängig voneinander steuerbar und an eine (nicht dargestellte) Steuerung angeschlossen. Mit ihr ist gewährleistet, daß die Antriebe synchron fahren, so daß der Querträger 14 einwandfrei rechtwinklig zur Längsrichtung der Pakete 9, 9' ausgerichtet ist. Dadurch ist gewährleistet, daß die Holzpakete 9, 9' einwandfrei rechtwinklig durchgesägt werden. Der Schnittwinkel kann vorteilhaft manuell korrigiert werden, falls ein Parallelitätsfehler zur Leimfuge auftreten sollte.

Der Querträger 14 ist an seinen Enden so mit den Längsträgern 16, 17 verbunden, daß er um kleine Winkel schräg zur Transportrichtung 18 verstellt werden kann, beispielsweise in einem Winkelbereich von ± 7°. Dadurch kann das Paket 9, 9' mit schräg liegenden Seiten gesägt werden, so daß diese gesägten Plattenstücke beispielsweise für die Sargherstellung eingesetzt werden können, bei denen Holzstücke mit schrägen Längsrändern benötigt werden.

## Patentansprüche

1. Sägeeinrichtung für Werkstücke (9, 9') aus Holz, mit mindestens einer ein Sägeblatt (22) aufweisenden Sägeeinheit (15), die quer zur Längsrichtung der Werkstücke (9, 9') verstellbar ist, die auf einer Auflage aufliegen, die wenigstens ein Transportelement aufweist, auf dem Profilteile (36) angeordnet sind, die mit Abstand voneinander liegen,
**dadurch gekennzeichnet, daß** die Werkstücke Platten (9, 9') sind, und daß das Transportelement ein Transportband (35) ist, auf dem die Profilteile (36) in Form von Längsprofilteilen befestigt sind, die sich in Transportrichtung (18) des Transportbandes (35) erstrecken, quer zur Transportrichtung (18) mit Abstand nebeneinander liegen und jeweils mindestens eine Vertiefung (37) aufweisen, die in den Bewegungsweg des Sägeblattes (22) der Sägeeinheit (15) einstellbar ist, mit der die Platte (9, 9') quer zur ihrer Transportrichtung (18) trennbar ist.

2. Sägeeinrichtung nach Anspruch 1,
**dadurch gekennzeichnet, daß** die Längsprofilteile (36) über den Umfang des Transportbandes (35) verlaufen.

3. Sägeeinrichtung nach Anspruch 1 oder 2,
**dadurch gekennzeichnet, daß** das Transportband (35) geschlossen ist.

4. Sägeeinrichtung nach einem der Ansprüche 1 bis 3,
**dadurch gekennzeichnet, daß** die Sägeeinheit (15) längs eines Querträgers (14) verfahrbar ist.

5. Sägeeinrichtung nach Anspruch 4,
**dadurch gekennzeichnet, daß** der Querträger (14) in Transportrichtung (18) des Transportbandes (35) verstellbar ist.

6. Sägeeinrichtung nach Anspruch 4 oder 5,
**dadurch gekennzeichnet, daß** der Querträger (14) mit seinen Enden auf Längsträgern (16, 17) verfahrbar gelagert ist.

7. Sägeeinrichtung nach einem der Ansprüche 4 bis 6,
**dadurch gekennzeichnet, daß** der Querträger (14) an beiden Enden mit jeweils einem Motor (24) antreibbar ist.

8. Sägeeinrichtung nach Anspruch 7,
**dadurch gekennzeichnet, daß** die Motoren (24) unabhängig voneinander betätigbar und an eine gemeinsame Steuerung anschließbar sind.

9. Sägeeinrichtung nach Anspruch 7 oder 8,
**dadurch gekennzeichnet, daß** die Motoren (24) Servomotoren sind.

10. Sägeeinrichtung nach einem der Ansprüche 4 bis 9,
**dadurch gekennzeichnet, daß** der Querträger (14) quer zu seiner Längsachse relativ zu den Längsträgern (16, 17) zur Einstellung eines schrägen Schnittwinkels einstellbar ist.

11. Sägeeinrichtung nach einem der Ansprüche 1 bis 10,
**dadurch gekennzeichnet, daß** die Sägeeinheit (15) einen Sägemotor (29) hat, der in die jeweilige Schnittposition absenkbar ist.

12. Verfahren zum Sägen von Werkstücken (9, 9') aus Holz mit einer Sägeeinrichtung gemäß einem der Ansprüche 1 bis 11, bei dem das Werkstück (9, 9') mit einem Transportelement (35) transportiert und mit einer Sägeeinheit (15) durchgesägt wird,
**dadurch gekennzeichnet, daß** die Sägeeinheit (15) beim Sägevorgang quer zur Transportrichtung (18) des als Platte ausgebildeten Werkstückes (9, 9') verfahren und so ausgerichtet wird, daß das Sägeblatt (22) in die Vertiefungen (37) der Längsprofilteile (36) eingreift.

13. Verfahren nach Anspruch 12,
**dadurch gekennzeichnet, daß** die Sägeeinheit (15) zum Ausrichten des Sägeblattes (22) auf die Vertiefungen (37) der Längsprofilteile (36) in Transportrichtung (18) der Platten (9, 9') verfahren wird.

## Claims

1. Sawing device for work pieces (9, 9') made of wood with at least one saw unit (15) comprising a saw blade (22) which is displacable transversely to the lengthwise direction of the work pieces (9, 9') which lay on a rest which comprises at least one transportation element on which are disposed profiled parts (36) which lay at a certain distance from one another,
**characterised in that** the work pieces are panels (9, 9') and that the transportation element is a conveying belt (35) on which the profiled parts (36) are fixed in the form of lengthwise profiled parts which extend in the transfer direction (18) of the conveying belt (35), juxtaposed to each other with a gap and transversely to the direction of transportation (18) and comprise each at least one deepening (37), which is adjustable into the moving course of the saw blade (22) of the saw unit (15) by which the panel (9, 9') can be cut transversely to its direction of transportation (18).

2. Sawing device according to claim 1,
**characterised in that** the lengthwise profiled parts (36) proceed over the circumference of the conveying belt (35).

3. Sawing device according to claim 1 or 2,
**characterised in that** the conveying belt (35) is closed.

4. Sawing device according to one of the claims 1 to 3,
**characterised in that** the sawing unit (15) can be moved along a crossbeam (14).

5. Sawing device according to claim 4,
**characterised in that** the crossbeam (14) is displacable in the transfer direction (18) of the conveying belt (35).

6. Sawing device according to claim 4 or 5,
**characterised in that** the crossbeam (14) is movable mounted with its ends on longitudinal beams (16, 17).

7. Sawing device according to one of the claims 4 to 6,
**characterised in that** the crossbeam (14) is drivable at both ends respectively with a motor (24).

8. Sawing device according to claim 7,
**characterised in that** the motors (24) are actuable independently from one another and can be connected to a common control.

9. Sawing device according to claim 7 or 8,
**characterised in that** the motors (24) are servomotors.

10. Sawing device according to one of the claims 4 to 9,
**characterised in that** the crossbeam (14) is adjustable transversely to its longitudinal axis relative to the longitudinal beams (16, 17) for the adjustment of a bias intersection angle.

11. Sawing device according to one of the claims 1 to 10,
**characterised in that** the sawing unit (15) has a saw motor (29) which can be lowered into the respective cutting position.

12. Method for sawing of workpieces (9, 9') made of wood with a sawing device according to one of the claims 1 to 11, at which the workpiece (9, 9) is transported via a transport element (35) and is sawn across the grain by a sawing unit (15),
**characterised in that** the sawing unit (15) is proceeded transversely to the transfer direction (18) of the workpiece (9, 9') formed as a panel and is adjusted so that the saw blade (22) engages in the deepenings (37) of the lengthwise profiled parts (36).

13. Method according to claim 12,
**characterised in that** the sawing unit (15) is proceeded for the adjustment of the saw blade (22) onto the deepenings (37) of the lengthwise profiled parts (36) in the transfer direction (18) of the panels (9, 9').

## Revendications

1. Dispositif de sciage pour des pièces usinées (9, 9') en bois avec au moins une unité de scie (15) comprenant une lame de scie (22), déplaçable transversalement par rapport au sens longitudinal des pièces usinées (9, 9'), lesquelles sont posées sur un appui lequel comprend au moins un élément de transport sur lequel sont disposées des pièces profilées (36), placées à une certaine distance l'une à l'autre,
**caractérisé en ce que** les pièces usinées sont des panneaux (9, 9') et que l'élément de transport est une bande transporteuse (35) sur laquelle les pièces profilées (36) sont fixées sous la forme de pièces profilées longitudinalement (36) s'avançant dans la direction de transport (18) de la bande transporteuse (35), juxtaposées à une certaine distance transversalement par rapport à la direction de transport et comprenant respectivement au moins une cavité (37), laquelle est ajustable dans la trajectoire de la lame de scie (22) de l'unité de scie (15) avec laquelle le panneau (9, 9') peut être coupé transversalement à sa direction de transport (18).

2. Dispositif de sciage selon la revendication 1,
**caractérisé en ce que** les pièces profilées longitudinalement (36) se trouvent sur la périphérie de la bande transporteuse (35).

3. Dispositif de sciage selon revendication 1 ou 2,
**caractérisé en ce que** la bande transporteuse (35) est fermée.

4. Dispositif de sciage selon une des revendications 1 à 3,
**caractérisé en ce que** l'unité de scie (15) est déplaçable le long d'une barre transversale (14).

5. Dispositif de sciage selon la revendication 4,
**caractérisé en ce que** la barre transversale (14) est ajustable dans la direction de transport (18) de la bande transporteuse (35).

6. Dispositif de sciage selon la revendication 4 ou 5,
**caractérisé en ce que** la barre transversale (14) est montée déplaçable dans des longerons (16, 17) à ses extrémités.

7. Dispositif de sciage selon une des revendications 4 à 6,
**caractérisé en ce que** la barre transversale (14) peut être entrainée aux deux extrémités respectivement par un moteur (24).

8. Dispositif de sciage selon la revendication 7,
**caractérisé en ce que** les moteurs (24) peuvent être actionnés indépendamment l'une de l'autre et peuvent être branchés à une commande commune.

9. Dispositif de sciage selon une revendication 7 ou 8,
**caractérisé en ce que** les moteurs (24) sont des servomoteurs.

10. Dispositif de sciage selon une des revendications 4 à 9,
**caractérisé en ce que** la barre transversale (14) est ajustable transversalement à son axe longitudinal relativement aux longerons (16, 17) pour le réglage d'un angle de coupe en biais.

11. Dispositif de sciage selon une des revendications 1 à 10,
**caractérisé en ce que** l'unité de scie (15) a un moteur de scie (29) lequel peut être abaissé dans la position de coupe respective.

12. Procédé pour scier des pièces usinées (9, 9') en bois avec un dispositif selon une des revendications 1 à 11 dans lequel la pièce usinée (9, 9') est transportée par un élément de transport (35) et est sciée par une unité de scie (15),
**caractérisé en ce que**, durant le processus de sciage, l'unité de scie (15) est déplacée transversalement à la direction de transport (18) de la pièce usinée (9, 9') en forme de panneau et est ajustée de telle façon que la lame de scie (22) engrène dans les cavités (37) des pièces profilées longitudinalement (36).

13. Procédé selon la revendication 12,
**caractérisé en ce que**, pour aligner la lame de scie (22) aux cavités (37) des pièces profilées longitudinalement (36), l'unité de scie (15) est déplacée en direction de transport (18) des panneaux (9, 9').
